# EUROPEAN PATENT APPLICATION

(11) **EP 4 749 079 A1**
(43) Date of publication of application: **27.05.2026**
(21) Application number: 25209715.9
(22) Date of filing: 20.10.2025
(51) Int. Cl.: F01D 5/00, F01D 21/00

(54) **SYSTEM AND METHOD FOR MONITORING AND OPTIMIZING A REPAIR OPERATION BEING PERFORMED ON A COMPONENT**

(30) Priority: 20.11.2024 GB 202417055
(71) Applicant: Rolls-Royce plc, London N1 9FX (GB)
(72) Inventor: Harlow, Richard, Derby, DE24 8BJ (GB); Tarbit, Trevor, Derby, DE24 8BJ (GB); Forsyth, Lee, Derby, DE24 8BJ (GB); Johnson, Cameron, Derby, DE24 8BJ (GB); Papworth, Aiden, Derby, DE24 8BJ (GB); Sisson, Mark, Derby, DE24 8BJ (GB)
(74) Representative: Rolls-Royce plc

(57) **Abstract**

A system (100, 200) for monitoring and optimizing a repair operation being performed on a component (102, 202) includes at least one light sensor (104, 204) disposed proximal to the component (102, 202) to collect heat signature data (110, 210) emitted from the component (102, 202). The at least one light sensor (104, 204) is disposed in an oblique orientation (D1) relative to the component (102, 202). The system (100, 200) further includes a controller (108, 208) communicably coupled with the at least one light sensor (104, 204). The controller (108, 208) is configured to receive the heat signature data (110, 210) from the at least one light sensor (104, 204), compare the heat signature data (110, 210) with a nominal range for the heat signature, and generate an output signal (112, 212) if the heat signature data (110, 210) is outside of the nominal range for the heat signature.

## Description

### FIELD

This invention relates to a system for monitoring and optimizing a repair operation being performed on a component of a gas turbine engine. This invention further relates to a method for monitoring and optimizing the repair operation being performed on the component of the gas turbine engine.

### BACKGROUND

Components, such as those associated with gas turbine engines, may experience some form of damage during operation. If not repaired in a timely manner, such damage may result in eventual failure of the component. For example, seal fin features associated with turbine discs of the gas turbine engines may undergo cracking after continued operation of the gas turbine engine. If observed at component level upon overhaul/ repair, the cracking may deem the component unusable and may have to be scrapped. Such components are typically expensive and when damaged, are generally replaced with new components.

Reuse of the damaged components in the gas turbine engines may lead to substantial savings, for example, due to cost savings associated with replacement of such components. A variety of techniques may be used to repair the component. It is essential that a size and mechanical properties of the component after repair are consistent with a size and mechanical properties of the component before repair. However, conventional repair systems and methods, while eliminating damage such as cracks or pores from the components, lack to produce consistencies in the repaired components similar to that in the original components especially in terms of mechanical properties.

Thus, there exists a need for a system and/or a method that addresses the abovementioned shortcomings or at least provides a useful alternative to system and methods for monitoring and optimizing repair operations on a gas turbine engine component.

### SUMMARY

In a first aspect, there is provided a system for monitoring and optimizing a repair operation being performed on a component of a gas turbine engine. The system includes at least one light sensor disposed proximal to the component to collect heat signature data emitted from the component. The at least one light sensor is disposed in an oblique orientation relative to the component. The system further includes a controller communicably coupled with the at least one light sensor. The controller is configured to receive the heat signature data from the at least one light sensor. The controller is further configured to compare the heat signature data with a nominal range for the heat signature. The controller is further configured to generate an output signal if the heat signature data is outside of the nominal range for the heat signature to monitor and optimize a material removal rate from the component or one or more weld pool parameters related to the component.

The system operates in real-time during the repair operation on the component and may allow monitoring and optimizing of the repair operation being performed. Specifically, the system may monitor and optimize the material removal rate from the component, or the weld pool parameters related to the component by indicating a deviation in process parameters after comparing the instantaneous heat signature data with the nominal range of heat signature. In an example, the system may increase an accuracy as well as a reliability of a polishing operation or a welding operation by monitoring parameters, such as the heat signature data and/or the material removal rate from the component to determine if the polishing operation or the welding operation is being performed in an intended manner. Furthermore, the system may automatically adjust the polishing operation or the welding operation or notify technicians to adjust the polishing operation or the welding operation. Moreover, the system may be used in a variety of repair operations including, but not limited to, the polishing operation, the welding operation, a soldering operation, and a brazing operation.

The system may provide a viable solution that can be deployed across maintenance, repair, and overhaul bases in various industries. For example, the system may be used to repair components used in gas turbine engines, internal combustion engines, and the like. In one application, the polishing operation may be used to repair cracks on seal fin features of turbine discs associated with gas turbine engines. The system may provide a cost-effective and a time-effective approach to monitor process parameters during repair of components. Further, the system may be easy to deploy and may be used for various product groups. The system may have universal applicability. Particularly, the system may be used to repair damages arising in a variety of components that may have a linear shape or a non-linear shape.

In some embodiments, the system further includes a component monitoring device disposed proximal to the component and communicably coupled with the controller. The component monitoring device is disposed in an orthogonal orientation relative to the component. The component monitoring device is configured to generate a process signal indicative of the material removal rate from the component. The orthogonal orientation of the component monitoring device relative to the component may minimize cosine error and generate an instantaneous geometric profile data of the component. Thus, the orthogonal orientation of the component monitoring device may improve an accuracy in the determination of the material removal rate from the component. The component monitoring device may function as a comparator and improve an accuracy in monitoring and optimizing the repair operation.

In some embodiments, the component monitoring device includes a laser scanner. Alternatively, the component monitoring device may include any other system that can be used to scan the component to determine the material removal rate.

In some embodiments, the controller is configured to receive the process signal indicative of the material removal rate from the component. The controller is further configured to compare the material removal rate with a nominal range for the material removal rate. The controller is further configured to generate the output signal if each of the heat signature data is outside of the nominal range for the heat signature and the material removal rate is outside of the nominal range for the material removal rate. A combination of the heat signature data and the material removal rate may improve the accuracy of the system and the repair operation.

In some embodiments, the controller is configured to transmit the output signal to an apparatus that is being used to perform the repair operation on the component.

In some embodiments, the apparatus is configured to automatically adjust the one or more process parameters associated with the repair operation being performed on the component, based on a receipt of the output signal from the controller. In such embodiments, the system and the apparatus together provide a closed loop control system that may allow adjustment in the one or more process parameters associated with the repair operation being performed to achieve a desired outcome. Such a closed loop control system may enhance the accuracy of the repair operation. The one or more process parameters may include, for example, a pressure associated with the polishing apparatus, a flow rate of welding material, a power output of the welding apparatus, a laser power of the welding apparatus, a pulse width of the welding apparatus, a pulse frequency of the welding apparatus, an orientation of the of the welding apparatus, and so on.

In some embodiments, the apparatus includes a polishing apparatus, a welding apparatus, a soldering apparatus, or a brazing apparatus. The system may be used as a part of any other repair operation to improve an accuracy and a reliability of the corresponding repair operation.

In some embodiments, the system further includes an output module communicably coupled with the controller. The controller is configured to transmit the output signal to the output module. Based on a receipt of the output signal from the controller, the output module is configured to indicate a deviation in one or more process parameters associated with the repair operation being performed on the component. Accordingly, the technician may take corrective actions to align the polishing operation or the welding operation to meet the desired outcome. The output signal generated by the controller and displayed on the output module may allow the technicians to determine shortcomings associated with the repair operation or the apparatus that performs the repair operation. For example, in case of the polishing apparatus, the output signal may be used to determine a premature wear of an abrasive tool of the polishing apparatus, an excessive pressure between the abrasive tool and the component, high temperatures at some locations of the component that may alter mechanical properties of the component, and so on. Further, in case of the welding apparatus, the output signal may indicate high temperatures at some locations of the component that may alter mechanical properties of the component, an abnormal weld pool behaviour, an abnormal weld pool geometry, and so on.

In some embodiments, the at least one light sensor includes a visible light sensor and/or a non-visible light sensor. Specifically, when the apparatus includes the polishing apparatus, the at least one light sensor includes the non-visible light sensor and when the apparatus includes the welding apparatus, the at least one light sensor includes the visible light sensor. A type of the light sensor may be chosen based on the repair operation that is being performed.

In some embodiments, the at least one light sensor includes an infrared light sensor, a near-infrared light sensor, a forward-looking infrared light sensor, or a short-wave infrared light sensor. Specifically, when the apparatus includes the polishing apparatus, the at least one light sensor includes the infrared light sensor, the near-infrared light sensor, the forward-looking infrared light sensor, or the short-wave infrared light sensor.

In some embodiments, a wavelength range being emitted by the at least one light sensor is based on a type of the repair operation being performed on the component, a material of the component, and/or a quality of atmosphere in which the repair operation is being performed. Selection of an appropriate wavelength range based on the abovementioned parameters may improve the accuracy of the system. As an example, for the polishing operation, the wavelength range may be chosen to determine potential overheating of the component, the premature wear of the abrasive tool, an unexpected component variation impacting the material removal rate, and so on. Further, for the welding operation, the quality of atmosphere plays a significant role in choosing the wavelength range. In an example, the wavelength range of the visible light signals may be chosen to better assess plumes that may indicate a potential contamination of oxygen in a welding environment, and a resultant ionization of said contamination that may result in a coloured plume.

In some embodiments, the system further includes a filter that is disposed in front of the at least one light sensor. The filter is configured to control the wavelength range of the at least one light sensor, based on the type of the repair operation being performed on the component. The filter may enable the at least one light sensor to work within a specific wavelength range based on a type of the repair operation. Addition of the filter may enhance a process wavelength window and improve an accuracy of the heat signature data. Specifically, the filter may be disposed if it is desired to operate the light sensor in a specific wavelength range as per the repair operation or to employ a Go/No-Go filtration technique to improve a wavelength window accuracy.

In some embodiments, the nominal range for the heat signature is based on the type of the repair operation being performed on the component, a rate of cooling of the component, a rate of heat input to the component, the material of the component, and/or the quality of atmosphere in which the repair operation is being performed. Further, the nominal range is predetermined and stored within memories of the controller. Selection of an appropriate nominal range may increase the accuracy and the reliability of the system.

In some embodiments, the one or more weld pool parameters includes a weld pool behaviour and/or a weld pool geometry. The weld pool geometry may include a weld pool shape or a weld pool size. Thus, the system may determine if the weld pool parameters are in alignment with a desired output, which may ensure that the welding operation is being performed in an intended manner.

In a second aspect, there is provided a method for monitoring and optimizing a repair operation being performed on a component of a gas turbine engine. The method includes a step of disposing at least one light sensor proximal to the component to collect heat signature data emitted from the component. The at least one light sensor is disposed in an oblique orientation relative to the component. The method further includes a step of receiving, by a controller that is communicably coupled with the at least one light sensor, the heat signature data from the at least one light sensor. The method further includes a step of comparing, by the controller, the heat signature data with a nominal range for the heat signature. The method further includes a step of generating, by the controller, an output signal if the heat signature data is outside of the nominal range for the heat signature to monitor and optimize a material removal rate from the component or one or more weld pool parameters related to the component.

The method may allow real-time monitoring and optimizing of the repair operation being performed on the component. Specifically, the method may monitor and optimize the material removal rate from the component, or the weld pool parameters related to the component by indicating the deviation in process parameters after comparing the instantaneous heat signature data with the nominal range of heat signature. In an example, the method may increase an accuracy as well as a reliability of a polishing operation or a welding operation by monitoring parameters, such as the heat signature data and/or the material removal rate from the component to determine if the polishing operation or the welding operation is being performed in an intended manner. Furthermore, the method may automatically adjust the polishing operation or the welding operation or notify technicians to adjust the polishing operation or the welding operation. Moreover, the method may be used in a variety of repair operations, including the polishing operation, the welding operation, a soldering operation, and a brazing operation.

The method may provide a viable solution that can be deployed across maintenance, repair, and overhaul bases in various industries. For example, the method may be used to repair components used in gas turbine engines, internal combustion engines, and the like. In one application, the method may be associated with the polishing operation to repair cracks on seal fin features of turbine discs associated with gas turbine engines. The method may provide a cost-effective and a time-effective approach to monitor process parameters during repair of components. Further, the method may be easy to implement and may be used for various product groups. The method may have universal applicability. Particularly, the method may be used to repair damages arising in a variety of components that may have a linear shape or a non-linear shape.

In some embodiments, the method further includes the step of disposing a component monitoring device proximal to the component. The component monitoring device is disposed in an orthogonal orientation relative to the component. The component monitoring device is communicably coupled with the controller. The method further includes the step of generating, by the component monitoring device, a process signal indicative of the material removal rate from the component. The orthogonal orientation of the component monitoring device relative to the component may minimize cosine error and generate an instantaneous geometric profile data of the component. Thus, the orthogonal orientation of the component monitoring device may improve an accuracy in the determination of the material removal rate from the component. The component monitoring device may function as a comparator and improve an accuracy in the determination the material removal rate from the component.

In some embodiments, the method further includes the step of receiving, by the controller, the process signal indicative of the material removal rate from the component. The method further includes the step of comparing, by the controller, the material removal rate with a nominal range for the material removal rate. The method further includes the step of generating, by the controller, the output signal if each of the heat signature data is outside of the nominal range for the heat signature and the material removal rate is outside of the nominal range for the material removal rate. The combination of the heat signature data and the material removal rate may improve an accuracy of the method and the repair operation.

In some embodiments, the method further includes the step of transmitting, by the controller, the output signal to an apparatus that is being used to perform the repair operation on the component.

In some embodiments, the method further includes the step of automatically adjusting, by the apparatus, one or more process parameters associated with the repair operation being performed on the component, based on a receipt of the output signal from the controller. The apparatus may in turn adjust the one or more process parameters associated with the repair operation being performed to achieve a desired outcome. Such a closed loop control may enhance the accuracy of the repair operation. The one or more process parameters may include, for example, a pressure associated with the polishing apparatus, a flow rate of welding material, a power output of the apparatus, a laser power, a pulse width, a pulse frequency, an orientation of the apparatus, and so on.

In some embodiments, the method further includes the step of transmitting, by the controller, the output signal to an output module, the output module is communicably coupled with the controller. The method further includes the step of indicating, by the output module, a deviation in one or more process parameters associated with the repair operation being performed on the component, based on a receipt of the output signal from the controller. Accordingly, technicians may take corrective actions to align the polishing operation or the welding operation to meet the desired outcome.

The output signal generated by the controller and displayed on the output module may allow the technicians to determine shortcomings associated with the repair operation or the apparatus that performs the repair operation. For example, in case of the polishing apparatus, the output signal may be used to determine a premature wear of an abrasive tool of the polishing apparatus, an excessive pressure between the abrasive tool and the component, high temperatures at some locations of the component that may alter mechanical properties of the component, and so on. Further, in case of the welding apparatus, the output signal may indicate high temperatures at some locations of the component that may alter mechanical properties of the component, an abnormal weld pool behaviour, an abnormal weld pool geometry, and so on.

The details of one or more examples of the invention are set forth in the accompanying drawings and the description below. Other features, objects, and advantages of the invention will be apparent from the description and drawings, and from the claims.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**FIG. 1** shows a sectional side view of a gas turbine engine;
**FIG. 2** shows a schematic diagram of a system for monitoring and optimizing a repair operation being performed on a component of the gas turbine engine of FIG. 1, in accordance with an embodiment of the present invention;
**FIG. 3** shows a block diagram of the system of FIG. 2;
**FIG. 4** shows a schematic diagram of a system for monitoring and optimizing a repair operation being performed on a component of the gas turbine engine of FIG. 1, in accordance with another embodiment of the present invention;
**FIG. 5** shows a block diagram of the system of FIG. 4; and
**FIG. 6** shows a flowchart depicting various steps of a method for monitoring and optimizing the repair operation being performed on the component of the gas turbine engine.

### DETAILED DESCRIPTION

Aspects and embodiments of the present invention will now be discussed with reference to the accompanying figures. Further aspects and embodiments will be apparent to those skilled in the art.

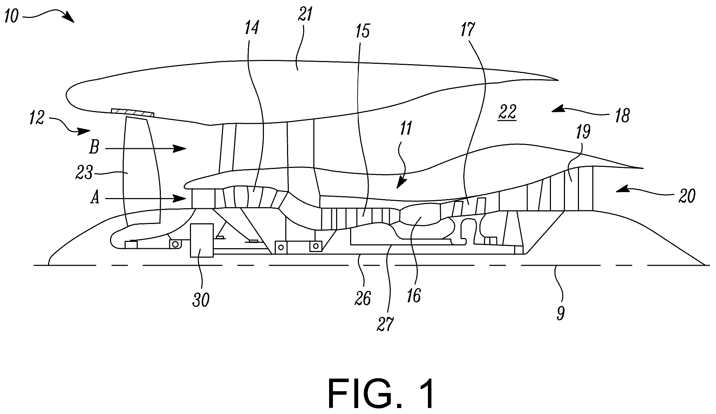

**FIG. 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present invention may be applied may have alternative configurations. For example, such engines may have an alternative number of compressors and/or turbines and/or an alternative number of interconnecting shafts. By way of further example, the gas turbine engine 10 shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present invention may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the invention may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial, and circumferential directions are mutually perpendicular.

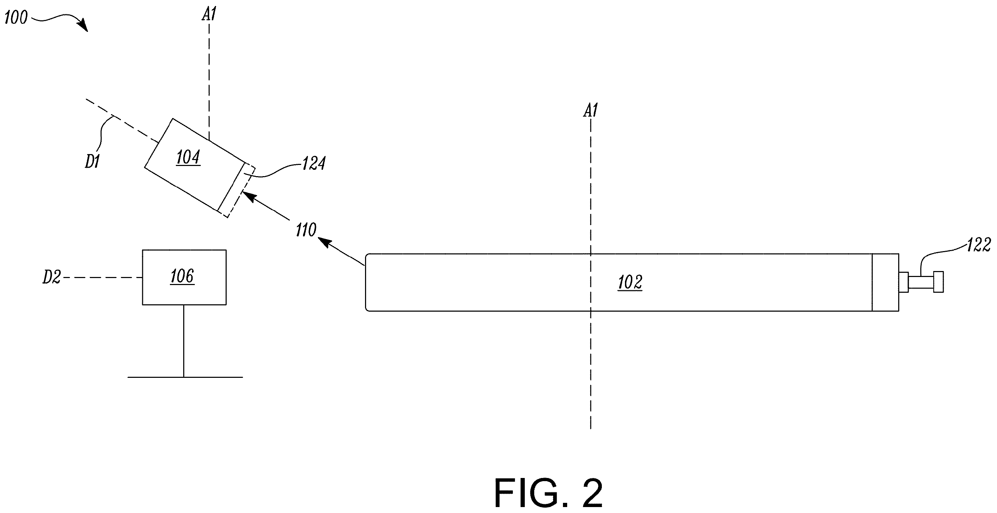

**FIG. 2** shows a schematic diagram of a system 100 for monitoring and optimizing a repair operation being performed on a component 102 of the gas turbine engine 10 of FIG. 1, in accordance with an embodiment of the present invention. As shown in FIG. 2, the component 102 extends along a vertical axis A1. During the repair operation, the component 102 may rotate about the vertical axis A1.

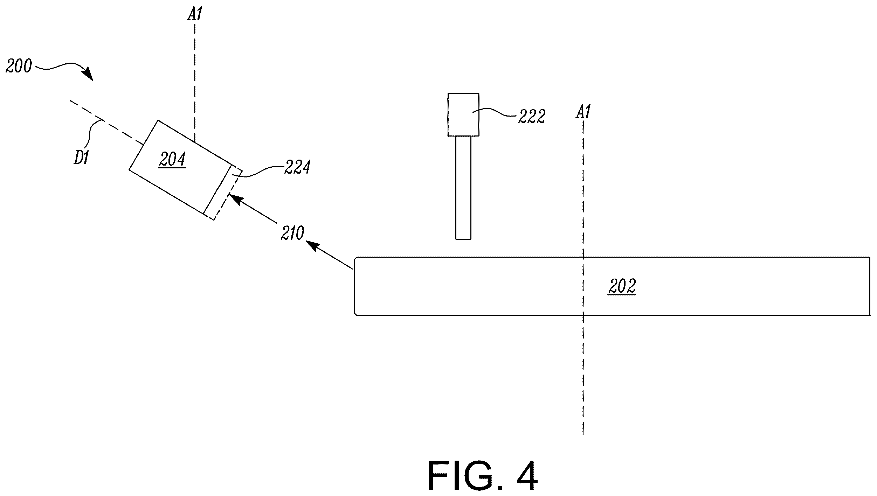

In the illustrated embodiment of FIG. 2, the repair operation includes a polishing operation being performed on the component 102 of the gas turbine engine 10. The repair operation may be performed using an apparatus 122, 222 (shown in FIG. 4). In an embodiment, the apparatus 122, 222 may include a polishing apparatus 122, a welding apparatus 222 (shown in FIG. 4), a soldering apparatus, or a brazing apparatus. The system 100 may be used as a part of any other repair operation to improve an accuracy and a reliability of the corresponding repair system. The apparatus 122 is the polishing apparatus 122 herein. The apparatus 122 will be hereinafter interchangeably referred to as "the polishing apparatus 122". The polishing apparatus 122 includes an abrasive tool that contacts the component 102 during the repair operation. The component 102 may have any shape, such as, a square shape, a rectangular shape, a circular shape, an oval shape, or any arbitrary shape, as per application requirements. In the illustrated embodiment of FIG. 2, the component 102 has a circular shape. The repair operation causes a heat release from the component 102.

The system 100 includes at least one light sensor 104 disposed proximal to the component 102 to collect heat signature data 110 emitted from the component 102. The at least one light sensor 104 is disposed in an oblique orientation D1 relative to the component 102. The oblique orientation D1 is defined in relation to the vertical axis A1. The heat signature data 110 represents an amount of heat that is released from the component 102 during the repair operation of the component 102.

In an embodiment, the at least one light sensor 104 includes a visible light sensor and/or a non-visible light sensor. In the illustrated embodiment of FIG. 2, the at least one light sensor 104 includes the non-visible light sensor. Specifically, when the polishing operation is performed on the component 102, the at least one light sensor 104 includes the non-visible light sensor. In an embodiment, the at least one light sensor 104 includes an infrared (IR) light sensor, a near-infrared (NIR) light sensor, a forward-looking infrared (FLIR) light sensor, or a short-wave infrared (SWIR) light sensor. Although a single light sensor 104 is illustrated herein, the system 100 may include multiple light sensors disposed at various locations around the component 102 to gather the heat signature data 110.

In an embodiment, a wavelength range being emitted by the at least one light sensor 104 is based on a type of the repair operation being performed on the component 102, a material of the component 102, and/or a quality of atmosphere in which the repair operation is being performed. For example, when the type of the repair operation being performed on the component 102 is the polishing operation, the wavelength range may include, but is not limited to, NIR, SWIR, FLIR, IR, etc. In some examples, when the light sensor 104 is the IR sensor, the wavelength range may be, for example, 780 nanometres (nm) and 1 millimetre (mm). In some examples, when the light sensor 104 is the NIR sensor, the wavelength range may be, for example, 800 nm and 2500 nm. In an example, when the light sensor 104 is the SWIR sensor, the wavelength range may be, for example, 1.4 micrometres (µm) and 3 µm. It should be noted that the wavelength range and the type of the light sensor 104 mentioned herein are exemplary in nature, and the wavelength range and the type of the light sensor 104 may vary based on application requirements. Selection of an appropriate wavelength range based on the abovementioned parameters may improve an accuracy of the system 100. As an example, for the polishing operation, the wavelength range may be chosen to determine potential overheating of the component 102, a premature wear of the abrasive tool, an unexpected component variation impacting a material removal rate from the component 102, and so on.

In an example, when the type of the repair operation being performed on the component 102 is the polishing operation, high quantities of high intensity wavelengths may indicate premature abrasive wear of the abrasive tool of the polishing apparatus 122, an excessive contact between the abrasive tool and the component 102, or high temperatures at some locations of the component 102 that may alter mechanical properties of the component 102. Further, low intensity wavelengths from the component 102 may indicate a low or incorrect contact between the abrasive tool and the component 102, local geometric defects, or a contact variation in the repair operation and percentage of process adherence.

In an embodiment, the system 100 further includes a filter 124 that is disposed in front of the at least one light sensor 104. The filter 124 is configured to control the wavelength range of the at least one light sensor 104, based on the type of the repair operation being performed on the component 102. The filter 124 may enable the at least one light sensor 104 to work within a specific wavelength range based on the type of the repair operation. Addition of the filter 124 may enhance a process wavelength window and improve an accuracy of the heat signature data 110. Specifically, the filter 124 may be disposed if it is desired to operate the light sensor 104 in a specific wavelength range as per the repair operation or to employ a Go/No-Go filtration technique to improve a wavelength window accuracy. In an example, the filter 124 may be disposed when it may be desirable to monitor Mid-Wave Infrared (MWIR) signals between 10 - 20 µm as opposed to 3 - 30 µm. In another example, the filter 124 may be disposed when it may be desirable to monitor presence of NIR signals above 1 µm as opposed to 0.75 - 3 µm.

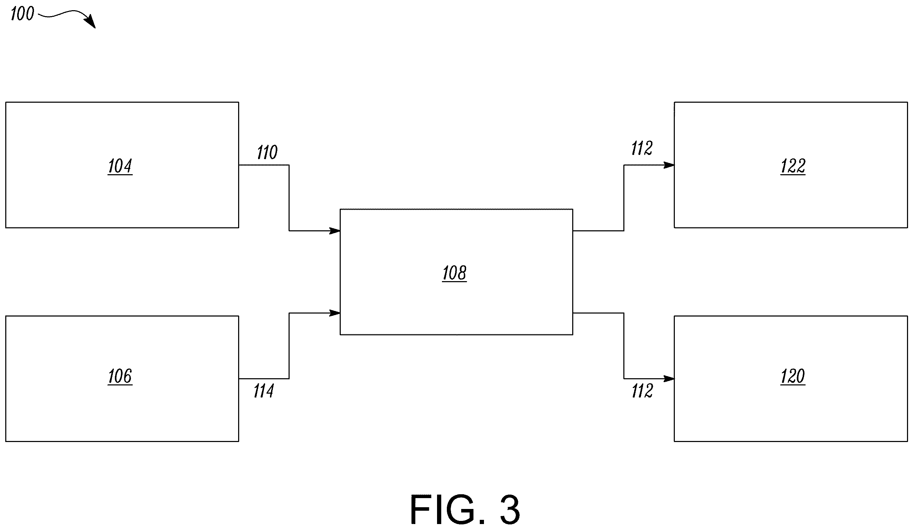

**FIG. 3** shows a block diagram of the system 100 of FIG. 2. The system 100 further includes a controller 108 communicably coupled with the at least one light sensor 104. The controller 108 is a device comprising hardware, software, or a combination of both along with memory. The controller 108 receives and processes data to monitor the repair operation. This ensures precise control over repair parameters, including temperature, pressure, abrasive force, and position, to achieve desired repair quality and compliance with operational specifications. The controller 108 may include one or more processors and one or more memories in communication with the one or more processors. In some examples, the memories may include a random access memory (RAM), such as synchronous dynamic random access memory (SDRAM), a read-only memory (ROM), a non-volatile random access memory (NVRAM), an electrically erasable programmable read-only memory (EEPROM), a FLASH memory, a magnetic or optical data storage media, and the like, that can be used to store various information or desired program codes in the form of instructions or data structures and that can be accessed by processors.

Further, the processors may execute various types of digitally stored instructions, such as software applications or algorithms, retrieved from the memories, or a firmware program which may enable the processors to perform a wide variety of operations. It should be noted that the processors may embody a single microprocessor or multiple microprocessors for receiving various input signals and generating output signals. Numerous commercially available microprocessors may perform the functions of the processors. Each processor may further include a general processor, a central processing unit, an application specific integrated circuit (ASIC), a digital signal processor, a field programmable gate array (FPGA), a digital circuit, an analog circuit, a microcontroller, any other type of processor, or any combination thereof. Each processor may include one or more components that may be operable to execute computer executable instructions or computer code that may be stored and retrieved from the memories.

The controller 108 is configured to receive the heat signature data 110 from the at least one light sensor 104. The controller 108 receives the heat signature data 110 while the repair operation is being performed on the component 102. The controller 108 is further configured to compare the heat signature data 110 with a nominal range for the heat signature. The controller 108 is further configured to generate an output signal 112 if the heat signature data 110 is outside of the nominal range for the heat signature to monitor and optimize the material removal rate from the component 102. The nominal range for the heat signature is stored within the memories of the controller 108.

In an embodiment, the nominal range for the heat signature is based on the type of the repair operation being performed on the component 102, a rate of cooling of the component 102, a rate of heat input to the component 102, the material of the component 102, and/or the quality of atmosphere in which the repair operation is being performed. As the factors, i.e., the component 102, the rate of heat input to the component 102, and/or the material of the component 102may vary, the nominal range for the heat signature may also vary and an appropriate nominal range for the heat signature may be chosen as per application requirements.

Referring to FIGS. 2 and 3, in an embodiment, the system 100 further includes a component monitoring device 106 disposed proximal to the component 102 and communicably coupled with the controller 108. The component monitoring device 106 is disposed in an orthogonal orientation D2 relative to the component 102. The orthogonal orientation D2 is defined relative to the vertical axis A1. The component monitoring device 106 is configured to generate a process signal 114 indicative of the material removal rate from the component 102. In an example, the component monitoring device 106 records live data corresponding to a two-dimensional profile of the component 102.

In an embodiment, the component monitoring device 106 includes a laser scanner. The laser scanner may include a blue laser scanner or a red laser scanner. Alternatively, the component monitoring device 106 may include any other system that can be used to scan the component 102 to determine the material removal rate.

The orthogonal orientation D2 of the component monitoring device 106 relative to the component 102 may minimize a cosine error and generate an instantaneous geometric profile data of the component 102. Thus, the orthogonal orientation D2 of the component monitoring device 106 may improve an accuracy in the determination of the material removal rate from the component 102. The component monitoring device 106 may function as a comparator and improve the accuracy in monitoring and optimizing the repair operation.

In an embodiment, the controller 108 is configured to receive the process signal 114 indicative of the material removal rate from the component 102. The controller 108 is further configured to compare the material removal rate with a nominal range for the material removal rate. The nominal range for the material removal rate may be stored within the memories of the controller 108. The controller 108 is further configured to generate the output signal 112 if each of the heat signature data 110 is outside of the nominal range for the heat signature and the material removal rate is outside of the nominal range for the material removal rate. A combination of the heat signature data 110 and the material removal rate may improve the accuracy of the system 100 and the repair operation.

Thus, the system 100 may be used to optimize the repair operation based on the outputs from the at least one light sensor 104 and the component monitoring device 106. In an example, the controller 108 may corelate the wavelength range profiles to the material removal rates, to establish consistency of the repair operation being applied to the component 102. At a particular wavelength within the wavelength range, the fine tuning of the wavelength range profiles with the material removal rates may assist in monitoring and optimizing the repair operation. The corelation of the wavelength range profiles to the material removal rates may establish consistency and wider applicability of the system 100.

As shown in FIG. 3, in an embodiment, the controller 108 is configured to transmit the output signal 112 to the apparatus 122 that is being used to perform the repair operation on the component 102. In an embodiment, the apparatus 122 is configured to automatically adjust one or more process parameters associated with the repair operation being performed on the component 102, based on a receipt of the output signal 112 from the controller 108.

The output signal 112 from the controller 108 may cause adjustment of the apparatus 122. For example, the controller 108 may be configured to transmit the output signal 112 to the apparatus 122 to adjust the pressure that the abrasive tool applies on the component 102. In such an embodiment, the system 100 and the apparatus 122 together provide a closed loop control system that may allow adjustment in the one or more process parameters associated with the repair operation being performed to achieve a desired outcome. Such a closed loop control system may enhance the accuracy of the repair operation.

In an embodiment, the system 100 further includes an output module 120 communicably coupled with the controller 108. The controller 108 is configured to transmit the output signal 112 to the output module 120. Based on a receipt of the output signal 112 from the controller 108, the output module 120 is configured to indicate a deviation in the one or more process parameters associated with the repair operation being performed on the component 102. The output module 120 may include any display device, such as, a display screen, a tablet, a smartphone, a laptop, and so on that displays data to notify technicians related to any inconsistency in the repair operation thereon. Based on the indication provided by the output module 120, the technician may take corrective actions to align the polishing operation to meet the desired outcome. The output signal 112 generated by the controller 108 and displayed on the output module 120 may allow the technicians to determine shortcomings associated with the repair operation or the apparatus 122 that performs the repair operation. For example, in case of the polishing apparatus 122, the output signal 112 may be used to determine the premature wear of the abrasive tool of the apparatus 122, the excessive pressure between the abrasive tool and the component 102, high temperatures at some locations of the component 102 that may alter the mechanical properties of the component 102, and so on.

**FIG. 4** shows a schematic diagram of a system 200 for monitoring and optimizing a repair operation being performed on a component 202 of the gas turbine engine 10 of FIG. 1, in accordance with another embodiment of the present invention. As shown in FIG. 4, the component 202 extends along a vertical axis A1. In the illustrated embodiment of FIG. 4, the repair operation includes a welding operation being performed on the component 202 of the gas turbine engine 10. The repair operation may be performed using the apparatus 222. The apparatus 222 is the welding apparatus 222 herein. The apparatus 222 will be hereinafter interchangeably referred to as "the welding apparatus 222". The welding apparatus 222 may incorporate any known welding technique to repair the component 202. In an example, the welding apparatus 222 may include a laser-type welding apparatus. The welding apparatus 222 may include a laser source capable of generating a laser beam, a beam delivery system, a laser generator, a powder feeder, etc. The powder feeder may provide a filler material powder feed at a controlled flow rate. Further, the component 202 may have any shape, such as, a square shape, a rectangular shape, a circular shape, an oval shape, or any arbitrary shape, as per application requirements. In the illustrated embodiment of FIG. 4, the component 202 has a circular shape. The welding operation causes a heat release from the component 202.

The system 200 includes at least one light sensor 204 disposed proximal to the component 202 to collect heat signature data 210 emitted from the component 202. The at least one light sensor 204 is disposed in an oblique orientation D1 relative to the component 202. The oblique orientation D1 is defined in relation to the vertical axis A1. The heat signature data 210 represents an amount of heat that is released from the component 202 during the repair operation of the component 202. In the illustrated embodiment of FIG. 4, the at least one light sensor 204 includes the visible light sensor. Specifically, when the welding operation is performed on the component 202, the at least one light sensor 204 includes the visible light sensor. Although a single light sensor 204 is illustrated herein, the system 200 may include multiple light sensors disposed at various locations around the component 202 that is under repair to gather the heat signature data 210 emitted from the component 202. **In** some examples, the system 200 may include a combination of one or more visible light sensors and one or more non-visible light sensors. The non-visible light sensors may be similar to the light sensor 104 described in relation to FIGS. 2 and 3.

In an embodiment, a wavelength range being emitted by the at least one light sensor 204 is based on a type of the repair operation being performed on the component 202, a material of the component 202, and/or a quality of atmosphere in which the repair operation is being performed. For example, when the type of the repair operation being performed on the component 202 is the welding operation, the wavelength range may include visible light signals, such as, red light signal, blue light signal, or green light signal. Further, for the welding operation, the quality of atmosphere plays a significant role in choosing the wavelength range. In an example, the wavelength range of the visible light signals may be chosen to better assess plumes that may indicate a potential contamination of oxygen in a welding environment, and a resultant ionization of said contamination that may result in a coloured plume.

In an example, when the type of the repair operation being performed on the component 202 is the welding operation, high quantities of high intensity wavelengths may indicate high temperatures at some locations of the component 202 that may alter the mechanical properties of the component 202. Further, low intensity wavelengths from the component 202 may indicate local geometric defects, or a contact variation in the repair operation and percentage of process adherence.

In an embodiment, the system 200 further includes a filter 224 that is disposed in front of the at least one light sensor 204. The filter 224 is configured to control the wavelength range of the at least one light sensor 204, based on the type of the repair operation being performed on the component 202. The filter 224 may enable the at least one light sensor 204 to work within a specific wavelength range based on the type of the repair operation. Addition of the filter 224 may enhance a process wavelength window and improve an accuracy of the heat signature data 210. Specifically, the filter 224 may be disposed if it is desired to operate the light sensor 204 in a specific wavelength range as per the repair operation or to employ a Go/No-Go filtration technique to improve a wavelength window accuracy.

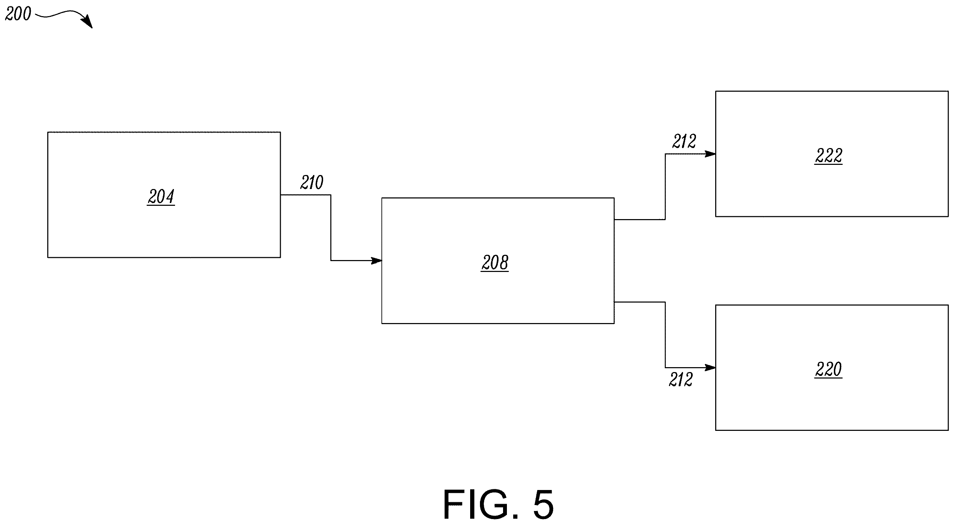

**FIG. 5** shows a block diagram of the system 200 of FIG. 4,.

The system 200 further includes a controller 208 communicably coupled with the at least one light sensor 204. The controller 208 is substantially similar to the controller 108 described in relation to FIG. 3. The controller 208 is configured to receive the heat signature data 210 from the at least one light sensor 204. The controller 208 receives the heat signature data 210 while the repair operation is being performed on the component 202. The controller 208 is further configured to compare the heat signature data 210 with the nominal range for the heat signature. The nominal range for the heat signature is stored within memories of the controller 208. The controller 208 is further configured to generate an output signal 212 if the heat signature data 210 is outside of the nominal range for the heat signature to monitor and optimize one or more weld pool parameters related to the component 202.

In an embodiment, the one or more weld pool parameters includes a weld pool behaviour and/or a weld pool geometry. The weld pool geometry may include a weld pool shape or a weld pool size. Thus, the system 200 may assist in determining if the weld pool parameters are in alignment with a desired output, which may ensure that the welding operation is being performed in an intended manner.

In an embodiment, the nominal range for the heat signature is based on the type of the repair operation being performed on the component 202, a rate of cooling of the component 202, a rate of heat input to the component 202, the material of the component 202, and/or the quality of atmosphere in which the repair operation is being performed. As the factors, i.e., the component 202, the rate of heat input to the component 202, the material of the component 202, and/or the quality of atmosphere in which the repair operation is being performed may vary, the nominal range for the heat signature may also vary and an appropriate nominal range for the heat signature may be chosen as per application requirements. The rate of heat input is derived from an arc energy and an efficiency of a welding process being used. Selection of an appropriate nominal range may increase an accuracy and a reliability of the system 200.

In an embodiment, the controller 208 is configured to transmit the output signal 212 to the apparatus 222 that is being used to perform the repair operation on the component 202.

In an embodiment, the apparatus 222 is configured to automatically adjust one or more process parameters associated with the repair operation being performed on the component 202, based on a receipt of the output signal 212 from the controller 208. The output signal 212 from the controller 208 may cause the adjustment of the apparatus 222. For example, the controller 208 may be configured to transmit the output signal 212 to adjust a flow rate of welding material, a power output of the apparatus 222, a laser power of the apparatus 222, a pulse width of the apparatus 222, a pulse frequency of the apparatus 222, an orientation of the apparatus 222, and so on. In such an embodiment, the system 200 and the apparatus 222 together provide a closed loop control system that may allow adjustment in the one or more process parameters associated with the repair operation being performed to achieve a desired outcome. Such a closed loop control system may enhance the accuracy of the repair operation. The one or more process parameters may include, for example, the flow rate of welding material, the power output of the welding apparatus 222, the laser power of the welding apparatus 222, the pulse width of the welding apparatus 222, the pulse frequency of the welding apparatus 222, the orientation of the of the welding apparatus 222, and so on.

In an embodiment, the system 200 further includes an output module 220 communicably coupled with the controller 208. The controller 208 is configured to transmit the output signal 212 to the output module 220. Based on a receipt of the output signal 212 from the controller 208, the output module 220 is configured to indicate a deviation in the one or more process parameters associated with the repair operation being performed on the component 202. The output module 220 may include any display device, such as, a display screen, a tablet, a smartphone, a laptop, and so on that displays data to notify technicians related to any inconsistency in the repair operation thereon. Based on the indication provided by the output module 220, the technicians may take corrective actions to align the welding operation to meet the desired outcome. The output signal 212 generated by the controller 208 and displayed on the output module 220 may allow the technicians to determine shortcomings associated with the repair operation or the apparatus 222 that is being used to perform the repair operation. For example, in case of the welding apparatus 222, the output signal 212 may be used to determine high temperatures at some locations of the component 202 that may alter the mechanical properties of the component 202, an abnormal weld pool behaviour, an abnormal weld pool geometry, and so on.

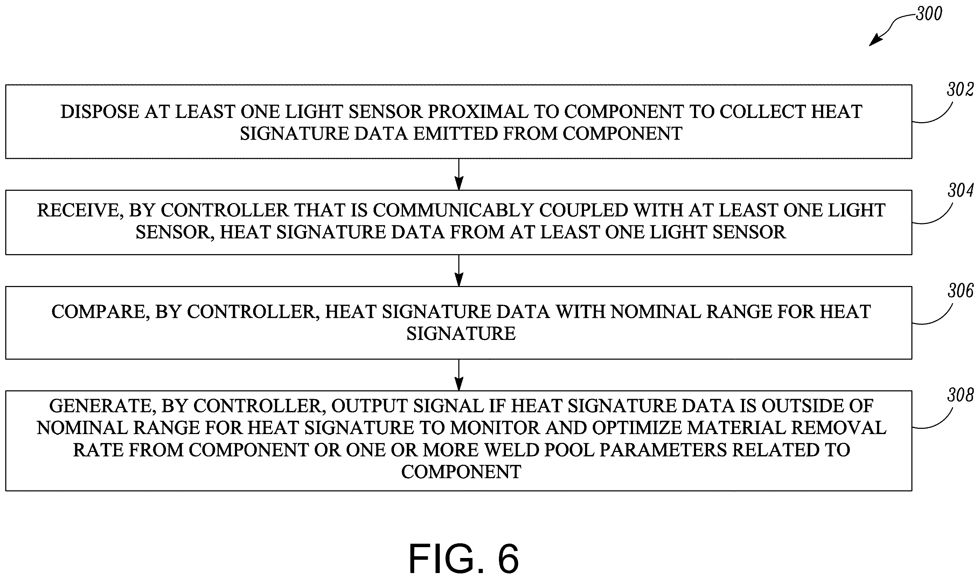

**FIG. 6** shows a flowchart of a method 300 for monitoring and optimizing the repair operation being performed on the component 102, 202 of the gas turbine engine 10. The method 300 will be described with further reference to FIGS. 1 to 6.

At step 302, the method 300 includes disposing the at least one light sensor 104, 204 proximal to the component 102, 202 to collect the heat signature data 110, 210 emitted from the component 102, 202. The at least one light sensor 104, 204 is disposed in the oblique orientation D1 relative to the component 102, 202.

At step 304, the method 300 further includes receiving, by the controller 108, 208 that is communicably coupled with the at least one light sensor 104, 204, the heat signature data 110, 210 from the at least one light sensor 104, 204.

At step 306, the method 300 further includes comparing, by the controller 108, 208, the heat signature data 110, 210 with the nominal range for the heat signature.

At step 308, the method 300 further includes generating, by the controller 108, 208, the output signal 112, 212 if the heat signature data 110, 210 is outside of the nominal range for the heat signature to monitor and optimize the material removal rate from the component 102 or the one or more weld pool parameters related to the component 202.

Referring to FIGS. 2, 3, and 6, in an embodiment, the method 300 further includes a step of disposing the component monitoring device 106 proximal to the component 102. The component monitoring device 106 is disposed in the orthogonal orientation D2 relative to the component 102. The component monitoring device 106 is communicably coupled with the controller 108. The method 300 further includes a step of generating, by the component monitoring device 106, the process signal 114 indicative of the material removal rate from the component 102.

In an embodiment, the method 300 further includes a step of receiving, by the controller 108, the process signal 114 indicative of the material removal rate from the component 102. In an embodiment, the method 300 further includes a step of comparing, by the controller 108, the material removal rate with the nominal range for the material removal rate. In an embodiment, the method 300 further includes a step of generating, by the controller 108, the output signal 112 if each of the heat signature data 110 is outside of the nominal range for the heat signature and the material removal rate is outside of the nominal range for the material removal rate.

Referring now to FIGS. 2 to 6, in an embodiment, the method 300 further includes a step of transmitting, by the controller 108, 208, the output signal 112, 212 to the output module 120, 220. The output module 120, 220 is communicably coupled with the controller 108, 208. The method 300 further includes a step of indicating, by the output module 120, 220, the deviation in the one or more process parameters associated with the repair operation being performed on the component 102, 202, based on the receipt of the output signal 112, 212 from the controller 108, 208.

In an embodiment, the method 300 further includes a step of transmitting, by the controller 108, 208, the output signal 112, 212 to the apparatus 122, 222 that is being used to perform the repair operation on the component 102, 202.

In an embodiment, the method 300 further includes a step of automatically adjusting, by the apparatus 122, 222, the one or more process parameters associated with the repair operation being performed on the component 102, 202, based on the receipt of the output signal 112, 212 from the controller 108, 208.

In an embodiment, the at least one light sensor 104, 204 includes the visible light sensor and/or the non-visible light sensor. The method 300 further includes disposing the filter 124, 224 in front of the at least one light sensor 104, 204 to control the wavelength range of the at least one light sensor 104, 204, based on the type of the repair operation being performed on the component 102, 202.

Referring to FIGS. 1 to 6, the system 100, 200 and the method 300 operates in real-time during the repair operation on the component 102, 202 and may allow monitoring and optimizing of the repair operation being performed on the component 102, 202. Specifically, the system 100, 200 and the method 300 may monitor and optimize the material removal rate from the component 102 or the weld pool parameters related to the component 102, 202, by indicating the deviation in process parameters after comparing the instantaneous heat signature data 110, 210 with the nominal range of heat signature. In an example, the system 100, 200 and the method 300 may increase the accuracy as well as the reliability of the polishing operation or the welding operation by monitoring parameters, such as the heat signature data 110, 210 and/or the material removal rate from the component 102 to determine if the polishing operation or the welding operation is being performed in an intended manner. Furthermore, the system 100, 200 and the method 300 may automatically adjust the polishing operation or the welding operation or notify the technicians to adjust the polishing operation or the welding operation. Moreover, the system 100, 200 and the method 300 may be used in a variety of repair operations including, but not limited to, the polishing operation, the welding operation, the soldering operation, and the brazing operation.

The system 100, 200 and the method 300 may provide a viable solution that can be deployed across maintenance, repair, and overhaul bases in various industries. For example, the system 100, 200 and the method 300 may be used to repair components used in the gas turbine engine 10, internal combustion engines, and the like. **In** one application, the polishing operation may be used to repair cracks on seal fin features of turbine discs associated with the gas turbine engine 10. The system 100, 200 and the method 300 of the present invention may provide a cost-effective and a time-effective approach to monitor process parameters during repair of the components 102, 202. Further, the system 100, 200 and the method 300 may be easy to deploy and may be used for various product groups. The system 100, 200 and the method 300 may have universal applicability. Particularly, the system 100, 200 and the method 300 may be used to repair damages arising in a variety of components 102, 202 that may have a linear shape or a non-linear shape.

It will be understood that the invention is not limited to the embodiments above described and various modifications and improvements can be made without departing from the concepts described herein. Except where mutually exclusive, any of the features may be employed separately or in combination with any other features and the invention extends to and includes all combinations and sub-combinations of one or more features described herein.

## Claims

1. A system (100, 200) for monitoring and optimizing a repair operation being performed on a component (102, 202) of a gas turbine engine (10), the system (100, 200) comprising:
at least one light sensor (104, 204) disposed proximal to the component (102, 202) to collect heat signature data (110, 210) emitted from the component (102, 202), the at least one light sensor (104, 204) being disposed in an oblique orientation (D1) relative to the component (102, 202); and
a controller (108, 208) communicably coupled with the at least one light sensor (104, 204), wherein the controller (108, 208) is configured to:
receive the heat signature data from the at least one light sensor (104, 204);
compare the heat signature data with a nominal range for the heat signature; and
generate an output signal (112, 212) if the heat signature data is outside of the nominal range for the heat signature to monitor and optimize a material removal rate from the component (102) or one or more weld pool parameters related to the component (202).

2. The system (100) of claim 1, further comprising a component monitoring device (106) disposed proximal to the component (102) and communicably coupled with the controller (108), the component monitoring device (106) being disposed in an orthogonal orientation (D2) relative to the component (102), wherein the component monitoring device (106) is configured to generate a process signal (114) indicative of the material removal rate from the component (102).

3. The system (100) of claim 2, wherein the component monitoring device (106) includes a laser scanner.

4. The system (100) of claim 2 or 3, wherein the controller (108) is further configured to:
receive the process signal (114) indicative of the material removal rate from the component (102);
compare the material removal rate with a nominal range for the material removal rate; and
generate the output signal (112) if each of the heat signature data (110) is outside of the nominal range for the heat signature and the material removal rate is outside of the nominal range for the material removal rate.

5. The system (100, 200) of any preceding claim, wherein the controller (108, 208) is further configured to transmit the output signal (112, 212) to an apparatus (122, 222) that is being used to perform the repair operation on the component (102, 202).

6. The system (100, 200) of claim 5, wherein the apparatus (122, 222) is configured to automatically adjust one or more process parameters associated with the repair operation being performed on the component (102, 202), based on a receipt of the output signal (112, 212) from the controller (108, 208), and optionally the apparatus (122, 222) includes a polishing apparatus (122), a welding apparatus (222), a soldering apparatus, or a brazing apparatus.

7. The system (100, 200) of any preceding claim, further comprising an output module (120, 220) communicably coupled with the controller (108, 208), wherein the controller is further configured to transmit the output signal (112, 212) to the output module (120, 220), and wherein, based on a receipt of the output signal (112, 212) from the controller (108, 208), the output module (120, 220) is configured to indicate a deviation in one or more process parameters associated with the repair operation being performed on the component (102, 202).

8. The system (100, 200) of any preceding claim, wherein the at least one light sensor (104, 204) includes a visible light sensor and/or a non-visible light sensor, optionally including an infrared light sensor, a near-infrared light sensor, a forward-looking infrared light sensor, or a short-wave infrared light sensor.

9. The system (100, 200) of any preceding claim, wherein a wavelength range being emitted by the at least one light sensor (104, 204) is based on a type of the repair operation being performed on the component (102, 202), a material of the component (102, 202), and/or a quality of atmosphere in which the repair operation is being performed.

10. The system (100, 200) of claim 9, further comprising a filter (124, 224) that is disposed in front of the at least one light sensor (104, 204), and wherein the filter (124, 224) is configured to control the wavelength range of the at least one light sensor (104, 204), based on the type of the repair operation being performed on the component (102, 202).

11. The system (100, 200) of claim 9, wherein the nominal range for the heat signature is based on the type of the repair operation being performed on the component (102, 202), a rate of cooling of the component (102, 202), a rate of heat input to the component (102, 202), the material of the component (102, 202), and/or the quality of atmosphere in which the repair operation is being performed.

12. The system (100, 200) of any preceding claim, wherein the one or more weld pool parameters includes a weld pool behaviour and/or a weld pool geometry.

13. A method (300) for monitoring and optimizing a repair operation being performed on a component (102, 202) of a gas turbine engine (10), the method comprising the steps of:
disposing at least one light sensor (104, 204) proximal to the component (102, 202) to collect heat signature data (110, 210) emitted from the component, the at least one light sensor (104, 204) being disposed in an oblique orientation (D1) relative to the component;
receiving, by a controller (108, 208) that is communicably coupled with the at least one light sensor (104, 204), the heat signature data (110, 210) from the at least one light sensor;
comparing, by the controller (108, 208), the heat signature data (110, 210) with a nominal range for the heat signature; and
generating, by the controller (108, 208), an output signal (112, 212) if the heat signature data (110, 210) is outside of the nominal range for the heat signature to monitor and optimize a material removal rate from the component (102) or one or more weld pool parameters related to the component (202).

14. The method (300) of claim 13, further comprising the steps of:
disposing a component monitoring device (106) proximal to the component (102), the component monitoring device (106) being disposed in an orthogonal orientation (D2) relative to the component (102), the component monitoring device (106) is communicably coupled with the controller (108); and
generating, by the component monitoring device (106), a process signal (114) indicative of the material removal rate from the component (102).

15. The method (300) of claim 13 to 14, wherein the at least one light sensor (104, 204) includes a visible light sensor and/or a non-visible light sensor, the method further comprising:
disposing a filter (124, 224) in front of the at least one light sensor (104, 204) to control a wavelength range of the at least one light sensor (104, 204), based on a type of the repair operation being performed on the component (102, 202).
